# EUROPEAN PATENT SPECIFICATION

(11) **EP 3 771 838 B1**
(45) Date of publication and mention of the grant of the patent: **02.03.2022**
(21) Application number: 19305988.8
(22) Date of filing: 30.07.2019
(51) Int. Cl.: F16B 31/02, H01R 4/36

(54) **BREAK-OFF BOLT WITH TORQUE-LIMITING SECTION**
ABREISSSCHRAUBE MIT DREHMOMENTBEGRENZUNGSABSCHNITT
BOULON DE COUPURE COMPORTANT UNE SECTION DE LIMITATION DE COUPLE

(43) Date of publication of application: 03.02.2021
(73) Proprietor: Tyco Electronics-Simel, 21220 Gevrey Chambertin (FR)
(72) Inventor: DOSSMANN, Julien, 21220 Gevrey Chambertin (FR); PELTIER, Bruno, 21850 St. Apollinaire (FR); PETRIGNET, Laurent, 21220 Gevrey Chambertin (FR)
(74) Representative: Grünecker Patent- und Rechtsanwälte PartG mbB

(56) References cited:
- EP-A1- 3 388 696
- EP-A2- 2 657 548
- WO-A1-03/067102
- DE-A1-102015 102 223
- US-A- 4 199 216

## Description

The invention relates to a break-off bolt for securing a conductor, such as a wire or cable within a connector.

The aforementioned break-off bolts are often used for securing a conductor within a connector or connecting two electrical conductors with one another, for example, in medium or high voltage technology. Break-off bolts (see e.g. the prior art document WO 03/067102) are formed so that excess length of the break-off bolts may be sheared off. Consequently, the bolt should not protrude beyond an outer surface of the connector after the installation. To achieve and maintain an electrically well-conducting contact, the break-off bolt needs to be screwed into the connector with a predetermined torque. The predetermined torque may be ensured by using a so called torque wrench. However, torque wrenches are quite specific tools which are often not available on an installation site.

Therefore, it is an object of the invention to provide a simple break-off bolt that can be easily installed.

The invention solves the above-mentioned problem by providing a break-off bolt for securing a conductor within a connector, the break-off bolt having a first thread section and a second thread section, the first thread section and the second thread section comprising the same external thread with a minor diameter, the break-off bolt further comprising a torque-limiting section arranged between the first and second thread section, wherein, in the torque-limiting section, the break-off bolt has at least one of no thread having an outer diameter larger than the minor diameter on the external thread of the first and second thread section and an external thread having a larger minor diameter than the external thread of the first and second thread section. The tool for applying the torque to the nut is irrelevant for determining the predetermined torque and can thus be a simple tool, such as a standardized wrench.

With the inventive solution, a standardized nut can be screwed onto the first thread section until it reaches the torque-limiting section. The break-off bolt having no thread or a thread with a larger minor diameter than the minor diameter of the external thread of the first and second thread section blocks a movement of the nut relative to the break-off bolt, so that by inducing a torque onto the nut, the torque is transferred onto the break-off bolt. Consequently, the break-off bolt can be screwed into the connector. Once a predetermined torque is achieved, the nut may cut into the material of the torque-limiting section and travel relative to the break-off bolt to the second thread section. Therefore, the torque is no longer transferred to the break-off bolt ensuring that the break-off bolt is installed with the predetermined torque.

The invention can be further improved by the following features, which are independent from one another with respect to their respective technical effects and which can be combined arbitrarily.

According to a first embodiment of the invention, the external thread of the first thread section and the second thread section may extend to a respective free end of the break-off bolt, so that the nut can be easily screwed onto the first thread section and along the second thread section until abutment with the connector.

The torque-limiting section may be arranged directly neighbouring the first thread section and the second thread section. The nut may travel down the first thread section until it reaches the torque-limiting section. The internal thread of the nut may cut into the material of the break-off bolt at the torque-limiting section and further travel down the torque-limiting section, whereby the nut may directly engage the thread of the second thread section when passing the torque-limiting section.

Preferably, the entire torque-limiting section may comprise at least one of no thread with a diameter larger than the minor diameter of the first and second thread section and an external thread with a larger minor diameter than the first and second thread section.

To calibrate the predetermined torque, the torque-limiting section, particularly the entire torque-limiting section, may have a diameter, particularly an outer diameter, that is smaller than the major diameter of the thread of the first and second thread section. A higher predetermined torque can be set the closer the diameter of the torque-limiting section is to the major diameter of the first and second thread section. Accordingly, the predetermined torque can be set the closer the diameter of the torque-limiting section is to the minor diameter of the first and second thread limiting section.

If the torque-limiting section is unthreaded, the entire torque-limiting section may comprise an outer diameter that is smaller than the major diameter of the first and second thread section.

If the torque-limiting section is threaded, the minor diameter of the threaded torque-limiting section may be smaller than the major diameter of the first and second thread section, preferably along the entire threaded torque-limiting section. The major diameter of the threaded torque-limiting section may be the same as the major diameter of the first and second thread section.

To ensure a smooth transition of the nut from the first thread section to the second thread section, the thread of the second thread section may be a continuation of the thread of the first thread section. In other words, the thread of the first and second thread section may have the same pitch and lead angle.

When the torque-limiting section is threaded, the external thread of the torque-limiting section may be a continuation of the external thread of the first and second thread section, having the same pitch and lead angle. The external threads of the first and second thread section may be connected to one another via the external thread of the torque-limiting section, whereby the grooves of the external thread at the torque-limiting section may be filled by the material of the break-off bolt acting as a thread lock. Consequently, tilting of the nut in the torque-limiting section may be prevented and the nut can run down the break-off bolt smoothly. Once the nut engages the external thread of the first thread section, it can continuously engage the external thread of the torque-limiting section and the second thread section.

The length of the torque-limiting section between the first and second thread section may be smaller than a thickness of a standardized nut, so that the standardized nut can simultaneously be engaged to the thread of the first thread section and the thread of the second thread section, further ensuring a smooth screwing of the nut. Consequently, canting of the nut on the break-off bolt can be prevented allowing for an easier installation of the break-off bolt.

According to a further advantageous embodiment, the torque-limiting section and the first and second thread section may be formed integrally with one another as a monolithic component. This may further reduce the complexity of the break-off bolt. No additional components are necessary to block the movement of the nut before surpassing the predetermined torque.

The break-off bolt may preferably be hollow, so that the break-off bolt is thin-walled, reducing the torque necessary for shearing the break-off bolt. The break-off bolt may comprise a cavity that is opened towards the free end of the first thread section. The free end of the second thread section may be adapted to press the wire and/or cable against the connector and may thus be solid. With the solid free end of the second thread section, the break-off bolt may lie flat on the conductors pressing against them with surface pressure.

The break-off bolt may comprise at least partially an internal thread. The internal thread can be formed in the cavity and may preferably be arranged at least in the second thread section. In a further embodiment, the internal thread may extend throughout the entire cavity. With the internal thread, the shearing off of the break-off bolt may be further benefitted. The internal thread may comprise spiral or discrete grooves, which may allow for a clean break at the top of the remaining break-off bolt when the excess break-off bolt is sheared off by the nut when compared to a hollow screw body without an internal thread.

For further reducing the occurrence of burs after shearing, the internal thread may extend opposite to the external thread. The internal thread may have a counter helicoid compared to the helicoid of the external thread. The internal thread and the external thread may be arranged staggered to one another, so that the grooves of the internal thread and the grooves of the external thread run parallel to one another. The crossing between the spiral of the internal thread and the external thread may provide a weakening of the break-off bolt due to the reduced wall thickness of the break-off bolt at the crossing. Therefore, the torque necessary for shearing the break-off bolt may be further reduced.

The break-off bolt may be broken, particularly sheared, at any place along the threads, so that a predetermined shearing section is not necessary. This is particularly advantageous, as the break-off bolt may be used for connectors with different wire and/or cable diameters as well as different amounts of conductors being connected to one another in the connector. Depending on the application, different lengths of the remaining part of the break-off bolt are required. However, as the break-off bolt can be sheared at any place along the external thread structurally, identical break-off bolts can be used in different applications regardless of the conductor diameter. The break-off bolt may preferably be sheared off at an interface between the nut and the connector, so that the remaining part of the break-off bolt does not protrude beyond the outer surface of the connector.

Furthermore, the internal thread may comprise at least one of a different pitch and different lead angle than the external thread. Particularly, the crest angle of the internal thread may be larger then the crest angle of the external thread. This may further reduce the occurrence of burs after shearing.

Preferably, the torque for breaking, particularly shearing off, the break-off bolt, may be lower than the predetermined torque for overcoming the torque-limiting section. Having a lower torque for breaking, particularly shearing off, the break-off bolt may reduce the risk of the remaining part of the break-off bolt that is inserted into an opening of the connector be pulled out of the opening.

The predetermined torque at the torque-limiting section may be larger than the tensile stress and smaller than the torsional stress at which the break-off bolt breaks. At the torque-limiting section, the break-off bolt may be only subjected to torsional stress. Consequently, the risk of breaking the break-off bolt is minimized at the torque-limiting section. Once the nut abuts the connector, further application of torque may cause tensile stress on the break-off bolt.

The break-off bolt may be formed by an electrically conductive material. Preferably, the break-off bolt may comprise at least one of aluminium and an aluminium alloy. Having an electrically conductive break-off bolt may further increase the quality of the electrical connection between the conductor and the connector.

In a contact assembly, a hollow pipe-shaped connector may be provided comprising at least one bore extending radially through a wall of the connector and at least one inventive break-off bolt or break-off assembly, wherein the at least one break-off bolt is adapted to be installed through the at least one bore. The bore may preferably have an internal thread complementary to the external thread of the second thread section, so that the break-off bolt may be screwed into the bore.

The remaining part of the break-off bolt after breaking, particularly shearing, may be arranged in the bore below or flush with an outer surface of the connector.

The bore may open into a depression formed on the outer surface of the connector. The depression may be formed complementary to the nut, particularly a standardized nut, so that the nut can be received in the depression and the break-off bolt is broken, particularly sheared off, close to the opening of the bore. This may further reduce the risk of the remaining break-off bolt protruding from the outer surface of the connector and/or out of the bore towards the outer surface of the connector.

The wire and/or cable may be arranged in the cavity of the connector. The at least one break-off bolt may protrude from the at least one bore into the cavity of the connector and press the wire and/or cable against an inner wall of the connector opposite the at least one bore.

A break-off assembly may comprise a break-off bolt according to any one of the aforementioned embodiments and a nut, preferably a standardized nut. The nut may be screwed onto the first thread section until it reaches the torque-limiting section. At the first thread section adjoining the torque-limiting section, the nut may form a rotationally rigid connection with the break-off bolt so that the torque induced on the nut in a winding direction for installing the break-off bolt is transmitted to the break-off bolt and the break-off bolt is screwed into the connector. Once the predetermined torque for installing the break-off bolt within the connector is exceeded, the nut may be rotationally decoupled from the break-off bolt and may travel down the torque-limiting section until it reaches the second thread section. The nut may be screwed onto the second thread section until it abuts the connector at which point the torque induced on the nut puts tensional stress upon the break-off screw at the interface between the nut and the connector.

The nut may comprise a pedestal with a lower outer diameter than the remaining nut. The pedestal may extend from the remaining nut so that the pedestal is adapted to abut the connector, so that the remaining nut may be engaged by an installation tool, such as a wrench.

In the following, the break-off bolt, according to the invention, is explained in greater detail with reference to the accompanying drawings in which exemplary embodiments are shown.

In the figures, the same reference numerals are used for elements which correspond to one another in terms of their function and/or structure.

According to the description of the various aspects and embodiments, elements shown in the drawings can be omitted if the technical effects of those elements are not needed for a particular application, and *vice versa:* i.e. elements that are not shown or described with reference to the figures but are described above can be added if the technical effect of those particular elements is advantageous in a specific application.

In the figures:
- Fig. 1: shows a schematic perspective view of a first embodiment of the break-off bolt according to the invention;
- Fig. 2: shows a schematic cut view of the first embodiment of the inventive break-off bolt;
- Fig. 3: shows a schematic perspective view of a second embodiment of the break-off bolt according to the invention;
- Fig. 4: shows a schematic cut view of the second embodiment of the break-off bolt according to the invention; and
- Figs. 5 to 11: show schematic perspective views of different positions of the break-off bolt according to the invention during installation.

In the following, the shorter word *"bolf"* continues to be used instead of the word *"break-off bolf".*

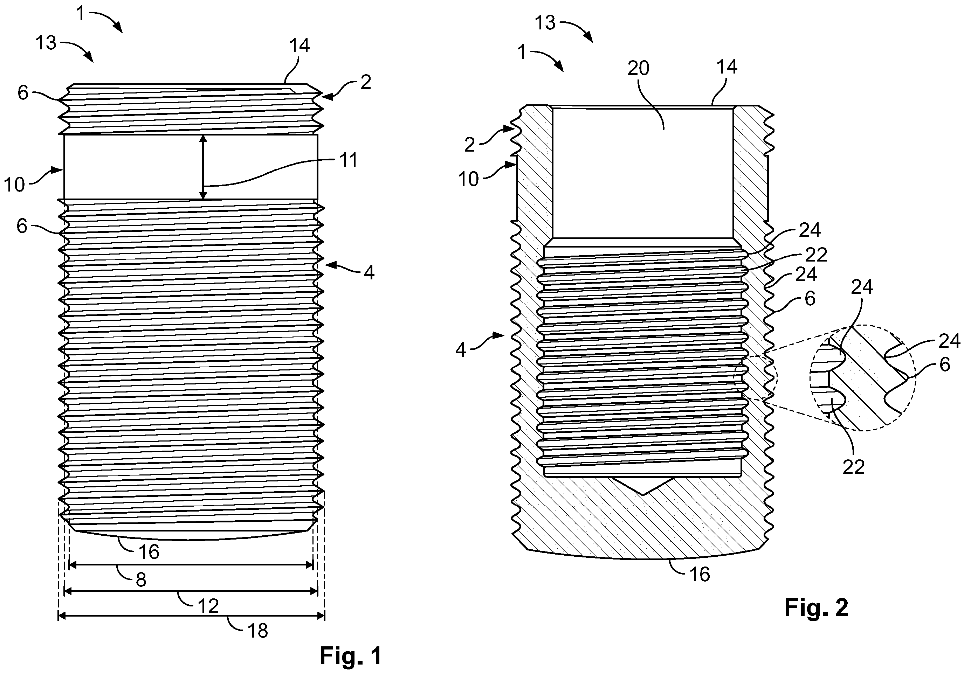

A first advantageous embodiment of the inventive bolt 1 is elucidated with reference to Figs. 1 and 2.

The bolt 1 extends along a longitudinal axis L and comprises a first thread section 2 and a second thread section 4. The first thread section 2 and the second thread section 4 comprise an external thread 6 with a minor diameter 8. The bolt 1 further comprises a torque-limiting section 10 extending along the longitudinal axis L between the first thread section 2 and second thread section 4, wherein, in the torque-limiting section 10, the bolt 1 has no thread having a larger diameter 12 than the minor diameter 8 of the first and second thread section 2, 4.

The bolt 1 may preferably be composed of a sufficiently strong, preferably well-conducting material, such as aluminium or an aluminium alloy. Preferably, the first thread section 2, the second thread section 4 and the torque-limiting section 10 may be formed integrally with one another as a monolithic component 13.

The external thread 6 of the first and second thread section 2, 4 may extend to a respective free end 14, 16 arranged opposite each other along the longitudinal axis L. The length of the first thread section 2 from the free end 14 to the torque-limiting section 10 may be sufficient so that a nut, preferably a standardized nut, can engage the external thread 6 of the first thread section 2 without falling off the bolt 1. Therefore, the nut can be easily screwed onto the first thread section 2. The first thread section 2 may, for example, comprise a thread with about two pitches. Therefore, material for the first thread section 2 may be saved.

The torque-limiting section 10 may be arranged directly adjoining the first thread section 2 and the second thread section 4. Preferably, the torque-limiting section 10 may comprise a length 11 along the longitudinal axis L smaller than a thickness of the nut, particularly the standardized nut. When the nut travels down the torque-limiting section 10, the nut may simultaneously engage the external thread 6 of the first thread section 2 and the second thread section 4. Thereby, a smooth transition of the nut from the first thread section 2 to the second thread section 4 may be achieved.

The smooth transition of the nut from the first thread section 2 to the second thread section 4 may be further enhanced by having the external thread 6 of the second thread section 4 be a continuation of the external thread 6 of the first thread section 2.

In accordance with the invention, the first and second thread section 2,4 comprise the same thread. Tilting of the nut may be prevented due to the external thread 6 of the second thread section 4 being a continuation of the external thread 6 of the first thread section 2.

Preferably, the entire torque-limiting section 10 may comprise no thread and may have a constant outer diameter 12 along the longitudinal axis L, further simplifying the bolt 1 and thereby reducing the manufacturing costs and increasing the production efficiency.

The outer diameter 12 of the torque-limiting section 10 may preferably be smaller than the major diameter 18 of the external thread 6 of the first and second thread section 2, 4. The predetermined torque at which the nut may be rotationally decoupled from the bolt 1 and may travel down the torque-limiting section 10 towards the second thread section 4 may be calibrated depending on the outer diameter 12 of the torque-limiting section 10. A higher predetermined torque may be set by having the outer diameter 12 of the torque-limiting section 10 closer to the major diameter 18 and vice versa, a lower predetermined torque may be set by having the outer diameter 12 closer to the minor diameter 8.

The predetermined torque may preferably be set to the torque necessary for installation of the bolt 1 in the connector. The predetermined torque may for example be about 32 Nm. However, depending on the installation requirements of the application, any other torque could be set as predetermined torque.

As can be seen in Fig. 1, the bolt 1 does not comprise an intended shearing section, as the distance of the shearing along the longitudinal axis L from the free end 16 of the second thread section 4 may vary depending on the application. Therefore, the bolt 1 may be flexible and be used for different applications, such as connecting a conductor within a connector with different conductor sizes.

Fig. 2 shows a cut view of the bolt 1 shown in Fig. 1. The bolt 1 may be hollow, comprising a cavity 20 that extends along the longitudinal axis at least partially from the second thread section 4 to the free end 14 of the first thread section 2 and opening towards the free end 14. Consequently, the bolt 1 may be thin-walled, reducing the shearing force necessary to break or shear the bolt 1. The cavity 20 may increase in width at the second thread section 4 in comparison to the cavity 20 in the first thread section 2 and/or torque-limiting section 10. This may prevent an unintentional breakage of the bolt 1 at the first thread section 2 and/or the torque-limiting section 10.

The free end 16 of the second thread section 4 may preferably be solid, so that the free end 16 may be adapted to lie flat on the wire and/or cable pressing against them with surface pressure. The surface pressure may be distributed along a larger contact area.

At least in the second thread section 4 the cavity 20 may comprise an internal thread 22 having grooves 24 that further decrease the wall thickness of the bolt 1, particularly at least at the second thread section 4, further reducing the torque needed for breaking, especially shearing, the bolt 1.

As depicted in the detailed view in Fig. 2, the internal thread 22 may be different to the external thread 6. For example, the internal thread 22 may have a counter helicoid compared to the external thread 6. In other words, the grooves 24 of the internal thread 22 may run parallel to the grooves 24 of the external thread 6, reducing the wall thickness of the bolt 1. The internal thread 20 may comprise at least one of a different lead angle, crest angle and pitch. The internal thread 20 may allow for a cleaner break at the top of the remaining bolt 1 after it has been sheared off by the nut compared to a thin walled, hollow bolt 1 without an internal thread 20.

According to this exemplary embodiment, the bolt 1 may be sheared off at any point along the longitudinal axis L. Consequently, the bolt 1 may be used for different applications and is independent from the diameter of the wire and/or connector.

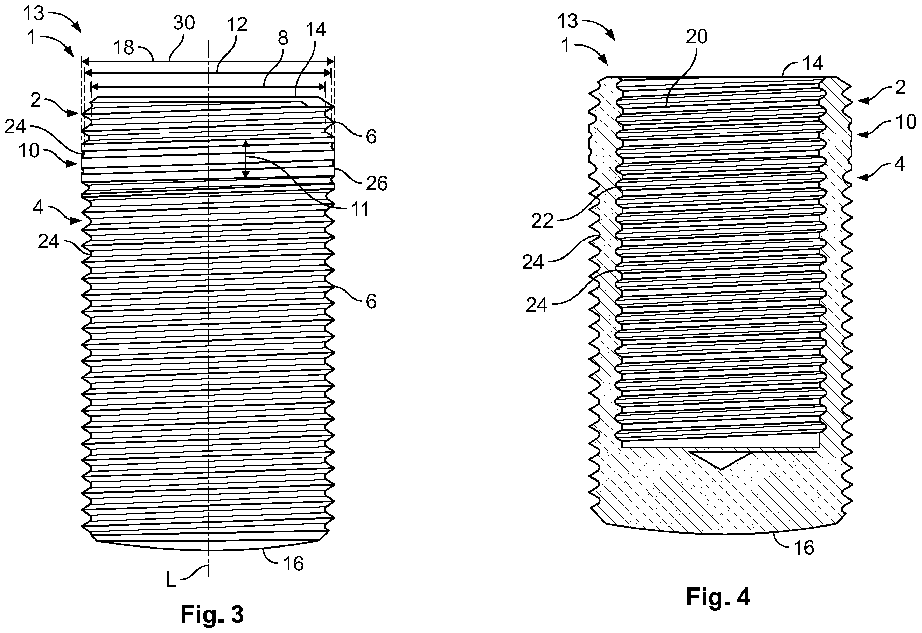

A second exemplary embodiment is further elucidated with reference to Figs. 3 and 4. In contrast to the first embodiment, the bolt 1 comprises a torque-limiting section 10 with an external thread 26, wherein the external thread 26 of the torque-limiting section 10 comprises a larger minor diameter 28 than the minor diameter 8 of the external thread 6 at the first and second thread section 2, 4.

The additional material of the bolt 1 in the grooves 24 of the external thread 26 compared to the grooves 24 of the external thread 6 may serve as a thread lock preventing the nut from travelling down the torque-limiting section 10 until the predetermined torque for installing the bolt 1 in the connector is surpassed.

The major diameter 18 of the external thread 6 may be the same as a major diameter 30 of the external thread 26. Preferably, the external thread 26 at the torque-limiting section 10 may be a continuation of the external thread 6 of the first thread section 2 and/or second thread section 4. Therefore, the nut is always engaged to an external thread 6, 26 and tilting of the nut may be prevented, while being screwed onto the bolt 1.

The bolt 1 in the second embodiment can also be hollow as can be seen in Fig. 4. In contrast to Fig. 2, the internal thread 22 may extend along the entire cavity 20. This may facilitate the production of the bolt 1. However, it should be noted that the second embodiment may also comprise an internal thread 22 that only partly extends along the cavity 20, such as in Fig. 2. Accordingly, the first embodiment may also comprise an internal thread 22 that extends along the entire cavity 20.

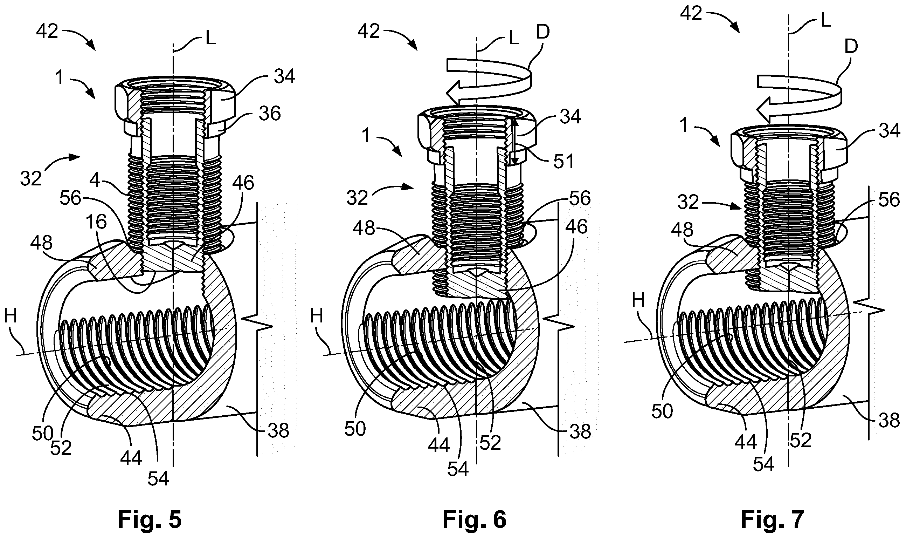

A break-off assembly 32 comprising a bolt 1 and a nut 34 is shown in Figs. 5 to 11. The nut 34 is adapted to engage the external thread 6 and may be a standardized nut. However, the nut 34 may comprise a pedestal 36 with a lower diameter than the remainder of the nut 34, wherein the pedestal 36 may extend along the longitudinal axis L further towards the free end 16 of the second thread section 4 for abutment with a connector 38. Therefore, the remainder of the nut 34 is elevated beyond an outer surface 40 of the connector 38, so that the connector 38 does not block the movement of a tightening tool. Particularly, the remainder of the nut 34 may have the same dimensions of a standardized nut.

A contact assembly 42 may comprise at least one bolt 1 and a connector 38. The connector 38 may extend along a horizontal axis H perpendicular to the longitudinal axis L of the at least one bolt 1 and may be formed as a hollow pipe 44 comprising at least one bore 46 for receiving the at least one bolt 1. The at least one bore 46 may extend radially through a wall 48 of the pipe shaped connector 38, allowing access of the at least one bolt 1 into the hollow space 50 of the connector 38. At least one conductor 52, such as a cable and/or wire, may be arranged in the hollow space 50 extending along the horizontal axis H. The connector 38 may comprise an electrical conductive material such as aluminium or an aluminium alloy.

Fig. 5 shows an intact bolt 1 in an initial position, in which the nut 34 is screwed onto the first thread section 2 until the nut 34 reaches the torque-limiting section 10. The torque-limiting section 10 blocks further movement of the nut 34 relative to the bolt 1 coupling the nut 34 and the bolt 1 in a rotationally rigid manner in a winding direction D for installing the bolt 1. Therefore, the torque applied to the nut 34 is directly transferred to the bolt 1 screwing the bolt 1 into the bore 46 (Fig. 6). Once the predetermined torque, preferably the required installation torque of the contact assembly 42, is surpassed, the nut 34 may cut into the additional material at the torque-limiting section 10. Consequently, the nut 34 may be rotationally decoupled from the bolt 1 and may travel down the torque-limiting section 10 and engage the external thread 6 of the second thread section 4, as shown in Fig. 7. The torque-limiting section 10 may preferably have a length 11 along the longitudinal axis L that is smaller than the thickness 51 of the nut 34, so that the nut 34 may simultaneously engage the external threads of the first and second thread section, preventing tilting of the nut further increasing the installation efficiency of the bolt 1 or break-off assembly. The free end 16 of the second thread section 4 presses against the conductor 52, so that the conductor 52 is clamped between the bolt 1 and an inner surface 54 of the connector's wall 48.

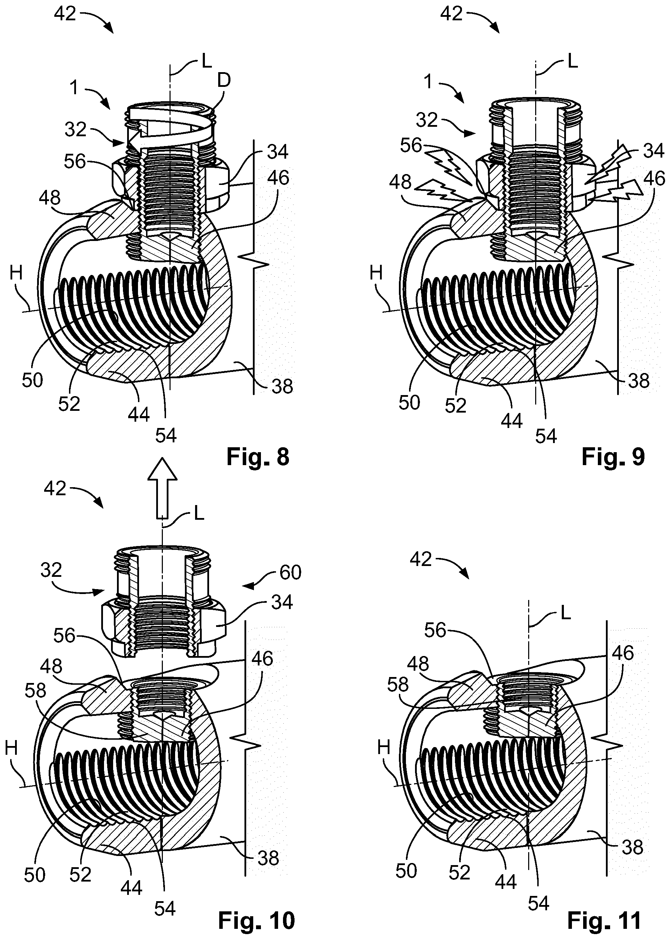

At the second thread section 4, the nut 34 may travel down until abutment with the outer surface 40 of the connector 38 (Figs. 8 and 9). The at least one bore 46 may open into at least one depression 56 formed on the outer surface 40 of the connector 38. The depression 56 may be adapted to receive the nut 34, in this case the pedestal 36 of the nut 34. Therefore, the nut 34 can evenly abut the connector 38 at the entrance of the bore 46 allowing for a clean cut of the bolt 1. By further inducing a torque on the nut 34, the torque is transmitted to the bolt 1 subjecting the bolt 1 to tensile stress that leads to the breakage, especially shearing off of the bolt 1 at the interface of the nut 34 and the connector 38. The bolt 1 may be split into a remaining part 58, arranged in the bore 46, and protrude into the hollow space 50 pressing against the conductor 52 and into a removable part 60 that can be discarded (Figs. 10 and 11). The nut may be arranged on the removable part 60 and can also be discarded. The remaining part 58 may preferably not protrude out of the bore 46 towards the outer surface 40 of the connector 38. To reduce the risk of pulling the remaining part 58 out of the bore during shearing, the torque required for breaking the bolt 1 at the interface between thread section 2 and connector 38 may be lower than the predetermined torque.

Therefore, with the inventive bolt 1, an easy and stable connection can be made. The installation can be completed in a single installation step, wherein a torque is applied to the nut 34 until the bolt 1 is broken, while ensuring that the bolt 1 is installed with a predetermined torque. During installation, no severed parts have to be removed before the nut 34 can be further screwed down the bolt 1, which may be the case by having different torque-limiting features. Consequently, the installation efficiency can be greatly enhanced and for example be easily performed automatically.

### REFERENCE NUMERALS

- 1: break-off bolt
- 2: first thread section
- 4: second thread section
- 6: external thread
- 8: minor diameter
- 10: torque-limiting section
- 11: length of torque-limiting section
- 12: diameter of the torque-limiting section
- 13: monolithic component
- 14: free end of the first thread section
- 16: free end of the second thread section
- 18: major diameter
- 20: cavity
- 22: internal thread
- 24: grooves
- 26: external thread
- 28: minor diameter of the torque-limiting section
- 30: major diameter of the torque-limiting section
- 32: break-off assembly
- 34: nut
- 36: pedestal
- 38: connector
- 40: outer surface
- 42: contact assembly
- 44: hollow pipe
- 46: bore
- 48: wall
- 50: hollow space
- 51: thickness of nut
- 52: conductor
- 54: inner surface
- 56: depression
- 58: remaining part of the bolt
- 60: removable part

- D: winding direction
- L: longitudinal axis
- H: horizontal axis

## Claims

1. Break-off bolt (1) for securing a conductor (52) within a connector (38), the break-off bolt (1) having a first thread section (2) and a second thread section (4), the first and the second thread section (2, 4) comprising the same external thread (6) with a minor diameter (8), the break-off bolt (1) further comprising a torque-limiting section (10) arranged between the first and second thread section (2, 4), **characterized in that**, in the torque-limiting section (10), the break-off bolt (1) has at least one of no thread with an outer diameter (12) larger than the minor diameter (8) of the external thread (6) and an external thread (26) having a minor diameter (28) larger than the minor diameter (8) of the first and second thread sections' (2, 4) external thread (6).

2. Break-off bolt (1) according to claim 1, wherein in the torque-limiting section (10), the break-off bolt (1) has an outer diameter (12) smaller than a major diameter (18) of the first and second thread sections' (2, 4) external thread (6).

3. Break-off bolt (1) according to claim 1 or 2, wherein the minor diameter (28) of the torque-limiting section (10) is smaller than a major diameter (18) of the first and second thread sections' (2, 4) external thread (6).

4. Break-off bolt (1) according to any one of claims 1 to 3, wherein the external thread (6) of the second thread section (4) is a continuation of the external thread (6) of the first thread section (2).

5. Break-off bolt (1) according to any one of claims 1 to 4, wherein the external thread (26) of the torque-limiting section (10) is a continuation of at least one of the external thread (6) of the first thread section (2) and the external thread (6) of the second thread section (4).

6. Break-off bolt (1) according to any one of claims 1 to 5, wherein a length (11) of the torque-limiting section (10) from the first thread section (2) to the second thread section (4) is less than a thickness (51) of a standardized nut (34).

7. Break-off bolt (1) according to any one of claims 1 to 6, wherein the torque-limiting section (10), the first thread section (2) and the second thread section (4) are formed integrally with one another as a monolithic component (13).

8. Break-off bolt (1) according to any one of claims 1 to 7, wherein the break-off bolt (1) is hollow and comprises a cavity (20).

9. Break off bolt (1) according to claim 8, wherein the cavity (20) has at least partially an internal thread (22).

10. Break-off bolt (1) according to claim 9, wherein at least partially at the second thread section (4) the internal thread (22) is formed in the cavity (20).

11. Break-off bolt (1) according to claim 9 or 10, wherein the internal thread (22) extends opposite to the external thread (6).

12. Break-off bolt (1) according to any one of claims 1 to 11, wherein the torque for breaking the break-off bolt (1) is lower than the torque for overcoming the torque-limiting section (10).

13. Break-off assembly (32) comprising a nut (34) and a break-off bolt (1) according to any one of claims 1 to 12, wherein the nut (34) is adapted to engage the external thread (6).

14. Contact assembly (42) comprising a pipe-shaped connector (38) having at least one bore (46) extending through a wall (48) of the connector (38) and at least one break-off bolt (1) according to any one of claims 1 to 12 or at least one break-off assembly (32) of claim 13, wherein the break-off bolt (1) is adapted to be installed through the at least one bore (46).

## Patentansprüche

1. Abreißbolzen (1) zum Befestigen eines Leiters (52) im Inneren eines Verbinders (38), wobei der Abreißbolzen (1) einen ersten Gewindeabschnitt (2) und einen zweiten Gewindeabschnitt (4) aufweist, der erste und der zweite Gewindeabschnitt (2, 4) das gleiche Außengewinde (6) mit einem Kerndurchmesser (8) umfassen und der Abreißbolzen (1) des Weiteren einen Drehmomentbegrenzungs-Abschnitt (10) umfasst, der zwischen dem ersten und dem zweiten Gewindeabschnitt (2, 4) angeordnet ist, **dadurch gekennzeichnet, dass**
in dem Drehmomentbegrenzungs-Abschnitt (10) der Abreißbolzen (1) kein Gewinde mit einem Außendurchmesser (12), der größer ist als der Kerndurchmesser (8) des Außengewindes (6), oder/und ein Außengewinde (26) mit einem Kerndurchmesser (28) hat, der größer ist als der Kerndurchmesser (8) des Außengewindes (6) des ersten und es zweiten Gewindeabschnitts (2, 4).

2. Abreißbolzen (1) nach Anspruch 1, wobei in dem Drehmomentbegrenzungs-Abschnitt (10) der Abreißbolzen (1) einen Außendurchmesser (12) hat, der kleiner ist als ein Außendurchmesser (18) des Außengewindes (6) des ersten und des zweiten Gewindeabschnitts (2, 4).

3. Abreißbolzen (1) nach Anspruch 1 oder 2, wobei der Kerndurchmesser (28) des Drehmomentbegrenzungs-Abschnitts (10) kleiner ist als ein Außendurchmesser (18) des Außengewindes (6) des ersten und des zweiten Gewindeabschnitts (2, 4).

4. Abreißbolzen (1) nach einem der Ansprüche 1 bis 3, wobei das Außengewinde (6) des zweiten Gewindeabschnitts (4) eine Fortsetzung des Außengewindes (6) des ersten Gewindeabschnitts (2) ist.

5. Abreißbolzen (1) nach einem der Ansprüche 1 bis 4, wobei das Außengewinde (26) des Drehmomentbegrenzungs-Abschnitts (10) eine Fortsetzung des Außengewindes (6) des ersten Gewindeabschnitts (2) oder/und des Außengewindes (6) des zweiten Gewindeabschnitts (4) ist.

6. Abreißbolzen (1) nach einem der Ansprüche 1 bis 5, wobei eine Länge (11) des Drehmomentbegrenzungs-Abschnitts (10) von dem ersten Gewindeabschnitt (2) bis zu dem zweiten Gewindeabschnitt (4) kleiner ist als eine Dicke (51) einer Standardmutter (34).

7. Abreißbolzen (1) nach einem der Ansprüche 1 bis 6, wobei der Drehmomentbegrenzungs-Abschnitt (10), der erste Gewindeabschnitt (2) und der zweite Gewindeabschnitt (4) als ein monolithisches Bauteil (13) integral miteinander ausgebildet sind.

8. Abreißbolzen (1) nach einem der Ansprüche 1 bis 7, wobei der Abreißbolzen (1) hohl ist und einen Hohlraum (20) umfasst.

9. Abreißbolzen(1) nach Anspruch 8, wobei der Hohlraum (20) wenigstens teilweise ein Innengewinde (22) aufweist.

10. Abreißbolzen (1) nach Anspruch 9, wobei das Innengewinde (22) wenigstens teilweise an dem zweiten Gewindeabschnitt (4) in dem Hohlraum (20) ausgebildet ist.

11. Abreißbolzen (1) nach Anspruch 9 oder 10, wobei das Innengewinde (22) entgegengesetzt zu dem Außengewinde (6) verläuft.

12. Abreißbolzen (1) nach einem der Ansprüche 1 bis 11, wobei das Drehmoment zum Abreißen des Abreißbolzens (1) schwächer ist als das Drehmoment zum Überwinden des Drehmomentbegrenzungs-Abschnitts (10).

13. Abreißanordnung (32), die eine Mutter (34) und einen Abreißbolzen (1) nach einem der Ansprüche 1 bis 12 umfasst, wobei die Mutter (34) so eingerichtet ist, dass sie mit dem Außengewinde (6) in Eingriff gebracht wird.

14. Kontaktanordnung (42), die einen rohrförmigen Verbinder (38), der wenigstens eine sich durch eine Wand (48) des Verbinders (38) erstreckende Bohrung (46) aufweist, sowie wenigstens einen Abreißbolzen (1) nach einem der Ansprüche 1 bis 12 oder wenigstens eine Abreißanordnung (32) nach Anspruch 13 umfasst, wobei der Abreißbolzen (1) zum Installieren durch die wenigstens eine Bohrung (46) hindurch eingerichtet ist.

## Revendications

1. Boulon de coupure (1) pour fixer solidement un conducteur (52) dans un connecteur (38), le boulon de coupure (1) ayant une première section filetée (2) et une seconde section filetée (4), la première et la seconde section filetée (2, 4) comprenant le même filetage externe (6) avec un diamètre mineur (8), le boulon de coupure (1) comprenant en outre une section de limitation de couple (10) agencée entre la première et la seconde section filetée (2, 4), **caractérisé en ce que**, dans la section de limitation de couple (10), le boulon de coupure (1) possède au moins l'un parmi aucun filetage avec un diamètre externe (12) plus grand que le diamètre mineur (8) du filetage externe (6) et un filetage externe (26) ayant un diamètre mineur (28) plus grand que le diamètre mineur (8) du filetage externe (6) de la première et de la seconde section filetée (2, 4).

2. Boulon de coupure (1) selon la revendication 1, dans lequel dans la section de limitation de couple (10), le boulon de coupure (1) possède un diamètre externe (12) plus petit qu'un diamètre majeur (18) du filetage externe (6) de la première et de la seconde section filetée (2, 4).

3. Boulon de coupure (1) selon la revendication 1 ou 2, dans lequel le diamètre mineur (28) de la section de limitation de couple (10) est plus petit qu'un diamètre majeur (18) du filetage externe (6) de la première et de la seconde section filetée (2, 4).

4. Boulon de coupure (1) selon l'une quelconque des revendications 1 à 3, dans lequel le filetage externe (6) de la seconde section filetée (4) est une continuation du filetage externe (6) de la première section filetée (2).

5. Boulon de coupure (1) selon l'une quelconque des revendications 1 à 4, dans lequel le filetage externe (26) de la section de limitation de couple (10) est une continuation d'au moins l'un parmi le filetage externe (6) de la première section filetée (2) et le filetage externe (6) de la seconde section filetée (4).

6. Boulon de coupure (1) selon l'une quelconque des revendications 1 à 5, dans lequel une longueur (11) de la section de limitation de couple (10) à partir de la première section filetée (2) à la seconde section filetée (4) est inférieure à une épaisseur (51) d'un écrou (34) standard.

7. Boulon de coupure (1) selon l'une quelconque des revendications 1 à 6, dans lequel la section de limitation de couple (10), la première section filetée (2) et la seconde section filetée (4) sont solidaires l'une de l'autre formant un composant monolithique (13).

8. Boulon de coupure (1) selon l'une quelconque des revendications 1 à 7, dans lequel le boulon de coupure (1) est creux et comprend une cavité (20).

9. Boulon de coupure (1) selon la revendication 8, dans lequel la cavité (20) possède au moins partiellement un filetage interne (22).

10. Boulon de coupure (1) selon la revendication 9, dans lequel au moins partiellement au niveau de la seconde section filetée (4) le filetage interne (22) est formé dans la cavité (20).

11. Boulon de coupure (1) selon la revendication 9 ou 10, dans lequel le filetage interne (22) s'étend à l'opposé du filetage externe (6).

12. Boulon de coupure (1) selon l'une quelconque des revendications 1 à 11, dans lequel le couple pour briser le boulon de coupure (1) est inférieur au couple pour aller au-delà de la section de limitation de couple (10).

13. Ensemble de coupure (32) comprenant un écrou (34) et un boulon de coupure (1) selon l'une quelconque des revendications 1 à 12, dans lequel l'écrou (34) est adapté pour venir en prise avec le filetage externe (6).

14. Ensemble à contact (42) comprenant un connecteur (38) en forme de tuyau ayant au moins un alésage (46) s'étendant à travers une paroi (48) du connecteur (38) et au moins un boulon de coupure (1) selon l'une quelconque des revendications 1 à 12 ou au moins un ensemble de coupure (32) selon la revendication 13, dans lequel le boulon de coupure (1) est adapté pour être installé à travers au moins un alésage (46).
